Europäisches Patentamt

European Patent Office

Office européen des brevets

(19)

(11) **EP 1 187 016 A1**

(12) **EUROPEAN PATENT APPLICATION**

(43) Date of publication:
**13.03.2002 Bulletin 2002/11**

(51) Int Cl.⁷: **G06F 9/46**

(21) Application number: **00119569.2**

(22) Date of filing: **07.09.2000**

(84) Designated Contracting States:
**AT BE CH CY DE DK ES FI FR GB GR IE IT LI LU MC NL PT SE**
Designated Extension States:
**AL LT LV MK RO SI**

(71) Applicant: **MATSUSHITA ELECTRIC INDUSTRIAL CO., LTD.**
**Kadoma-shi, Osaka 571-8501 (JP)**

(72) Inventor: **Tanaka, Katsuyoshi**
**Yokohama-shi, Kanagawa (JP)**

(74) Representative: **Grünecker, Kinkeldey,**
**Stockmair & Schwanhäusser Anwaltssozietät**
**Maximilianstrasse 58**
**80538 München (DE)**

(54) **Distributed processing job executing method and network system**

(57)     A distributed processing job executing method, to decide an optimum computer to execute a job and then utilize effectively a job queuing time, etc. by starting execution of the job after an input file of the job is transferred previously, and thereby to reduce a time required until the job is ended. The job executing method, in which a first computer (client) makes up a priority list of job execution based on a number of job executable servers owned by a job queuing server, load of servers, information of network location, etc., then executes a job for transferring input files on a second computer (file server) to a third computer (server) having a higher priority in the priority list, and then transfers information of the job and the priority list to the job queuing server to thus execute the job.

## FIG. 1

**Description**

BACKGROUND OF THE INVENTION

The present invention relates to a job executing method for a system in which resources used in jobs are arranged onto a local network, in which a plurality of local networks (LANs) are connected mutually via a wide area network (WAN), to be distributed to a plurality computers and, more particularly, a method of transferring input files used by the jobs to servers previously.

Conventionally, the job executing method in the distributed environment is disclosed in Japanese Patent Application Publication Hei 10-11406. The operation unit called as job, process, or task in the computer needs resources such as job file, application program, input file for execution, and executes various operation process after it reads the input file. The resources used in the job are not limited within one computer. The network system has been known in which the resources are distributed onto computers on a plurality of local networks (LANS) being connected mutually via the wide area network (WAN). In such network system, upon executing the job, the job queuing server selects the optimum computer based on the CPU activity ratio, the I/O unit activity ratio, the memory activity ratio, etc. to execute the job. At that time, as the method of selecting the optimum computer, there have been known the first method of selecting the computer on the local network (LAN) and the second method of selecting the computer on a plurality of local networks being connected mutually via the wide area network (WAN).

According to the above technology , in the first method, upon executing the job, the optimum computer is selected from the computers on the first local network (LAN) to execute the job. For this reason, if computers which are not used are present on the second local network being connected mutually via the wide area network (WAN), they are not used to execute the job. Therefore, there is such a problem that the computer resources are not effectively used and thus a time required until the job is ended is increased.

Also, in the second method, if the job is set to the execution queuing state since the optimum computer to execute the job cannot be found, the execution of the job is started after the execution queue is ended, and the process for reading the input file is started, and then the job operation process is started after the file transfer is ended. Therefore, the queuing time until the job execution cannot be effectively utilized. As a consequence, the job can be executed while using the computer resources of the overall network system more effectively than the first method. However, there is such a problem that the time required until the job is ended is increased.

SUMMARY OF THE INVENTION

An object of the present invention is to overcome the above problems in the prior art, and to provide a job executing method capable of utilizing effectively a job queuing time by deciding an optimum computer to execute a job before execution of the job is started, and then transferring an input file of the job previously.

Another object of the present invention is to provide a job executing method capable of preventing wasteful file transfer by updating the input file only in an updated area on a storage system of the computer to execute the job even when the file of the sender is changed until the job is executed.

In order to achieve the object, a distributed processing job executing method of the present invention makes up a priority list of job execution based on the number of job executable severs owned by a job queuing server, load of the servers, information of network location, etc., then executes the job for transferring input files on a second computer (file server) to a third computer (server) having a higher priority in the priority list, and then transfers information of the job and the priority list to the job queuing server to then execute the job.

Also, if the input file on the second computer (file server) is changed, the input file on the second computer (file server) is compared with the input file transferred to the third computer (server) byte by byte, and then only the changed area is transferred from the second computer (file server) to the third computer (server). Therefore, the wasteful file transfer can be prevented.

BRIEF DESCRIPTION OF THE DRAWINGS

FIG.1 is a view showing a configuration of a network system for executing jobs in embodiments 1 to 3;
FIG.2 is a flowchart showing a flow of process in a client 2 in the embodiments 1 to 2;
FIG.3 is a flowchart showing a flow of process in a queuing server 3 in the embodiments 1 to 2;
FIG.4 is a view showing data format of information which the client transmits to the job queuing server in the embodiment 1; and
FIG.5 is a view showing data format of information which the job queuing server transmits to the client in the embodiment 1.

DETAILED DESCRIPTION OF THE PREFERRED EMBODIMENTS

Embodiments of the present invention will be explained with reference to the drawings hereinafter.

(Embodiment 1)

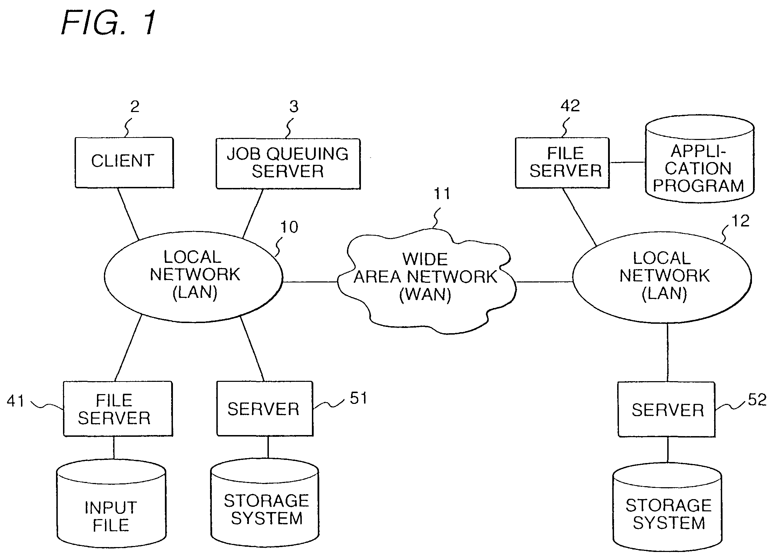

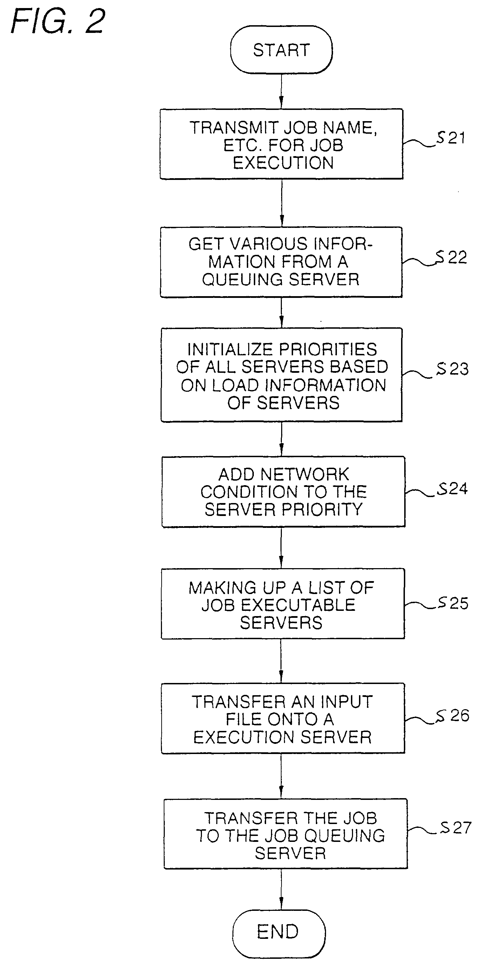

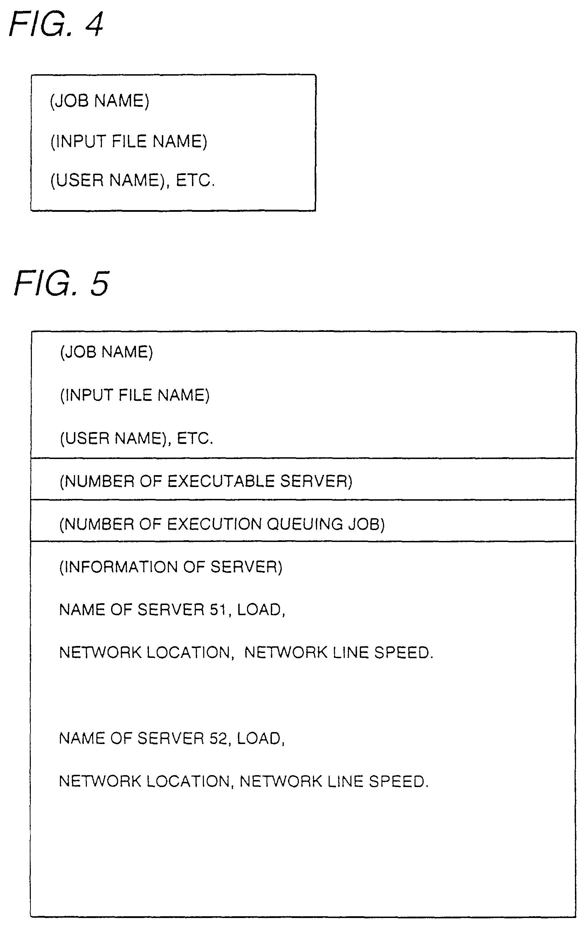

FIG.1 is a view showing a configuration of a network system for a distributed processing job executing method in a first embodiment of the present invention. In FIG.1, a first computer (client) 2 is a computer which gives the job, a job queuing server 3 is a computer which searches the server which can execute optimally the job, file servers 41, 42 are computers which store input files used in the job and application programs, and servers 51, 52 are computers which execute the job and are connected mutually via local networks (LANs) 10, 12 and a wide area network (WAN) 11. The job queuing server 3, the file servers 41, 42, the servers 51, 52, and the client 2 are computers containing a personal computer and a workstation. The input files and the application program are stored in a storage system connected to the file servers 41, 42 respectively.
The job queuing server 3 has a function which can select the optimum computer to execute the job based on the CPU activity ratio, the memory activity ratio, the I/O unit activity ratio, the storage system activity ratio, etc. Because a function capable of executing file exclusive control in byte unit is provided to the storage systems, the servers 51, 52 can have a function of holding the latest information on the storage systems by transferring only the updated area when the original files that are loaded on the storage systems are changed.
As for the distributed processing job executing method constructed as above, an operation thereof will be explained with reference to a flowchart in FIG.2 hereunder. First, if the user of the client 2 wishes to execute the job, such user transmits the job name, etc. used to execute the job to the job queuing server 3, as shown in FIG.4 (step S21). FIG.4 is a view showing a format of transmitted information in which the client 2 describes the information concerning the job such as the job name, the input file name, the user name, etc., when the client 2 throws the job into the job queuing server 3.
Then, the job queuing server 3 transmits the number of job executable server, server name, location information of the network to which the server is connected, and loading condition of the job executable server to the client 2 in the format shown in FIG.5 (step S22). FIG.5 is a view showing a format of information which is transmitted from the job queuing server 3 to the client 2 after the number of job executable server, the number of execution queuing job, information of job executable server, etc. are described on the information that is transmitted from the client 2 to the job queuing server 3 in step S22. The number of job executable server is the number of servers into which the job can be thrown. The number of execution queuing job is the number of jobs that wait for execution. The information of job executable server is a list in which names of job executable servers 51, 52, load, network location, and network line speed are described and arranged on a single line. The network location information is physical location of the network to which the job executable servers are connected, and indicates network ID, etc. The network line speed is the line speed of the wide area network 11 positioned between the local network 10, to which the file server 41 for saving the input files used in the job is connected, and the local network 12, to which the server 52 is connected. The load of the server can be calculated by following equations, for example.

$$\text{SPEC} = (\text{CPU activity ratio for 1 minute} + \text{CPU activity ratio for 15 minutes})/\text{computer ability} \qquad (1)$$

$$\text{MEM} = \text{memory activity ratio}/\text{computer ability} \qquad (2)$$

$$\text{STRG} = (\text{storage system activity ratio})/(\text{computer ability}) \qquad (3)$$

$$\text{Load} = \text{SPEC} * \text{MEM} * \text{STRG} * (\text{number of execution queuing job}) \qquad (4)$$

The CPU activity ratio for 1 minute, the CPU activity ratio for 15 minutes, the memory activity ratio, and the storage system activity ratio employ the latestmeasured values. The computer ability is a relative ability of the servers 51, 52, and normally Specint92 which is published as a value indicating the ability, etc. are set. The larger the value, the higher the ability. Then, the client 2 clears temporary storage areas that store priorities of all servers into 0 (step S23). Then, the client 2 calculates predictive required times to transmit the input files of the job to the servers, based on the information of the network location obtained in step S22, and then adds 1 to the priorities of respective servers in the order of the servers that need a longer required time (step S24). The required time for the file transfer is calculated by following equations, for example.

$$FTIME = (transferred\ file\ size)/(network\ line\ speed) \qquad (5)$$

$$Predictive\ required\ time = FTIME * (I/O\ unit\ activity$$

$$ratio) \qquad (6)$$

The I/O unit activity ratio employs the latest measured value. The load value, for example, is employed as the priority of the server. Then, the server names are aligned in the order of higher priority to make up a list of job executable servers (step S25). Then, the input file of the job is transferred onto of the storage system of the server having the higher priority in the list of job executable servers (step S26). Then, the information necessary for the job execution such as the job name, the input file name, the user name, the list of job executable servers, etc., all are the information described in FIG.5, are transferred to the job queuing server 3 (step S27). Then, processes in the job queuing server 3 are started.

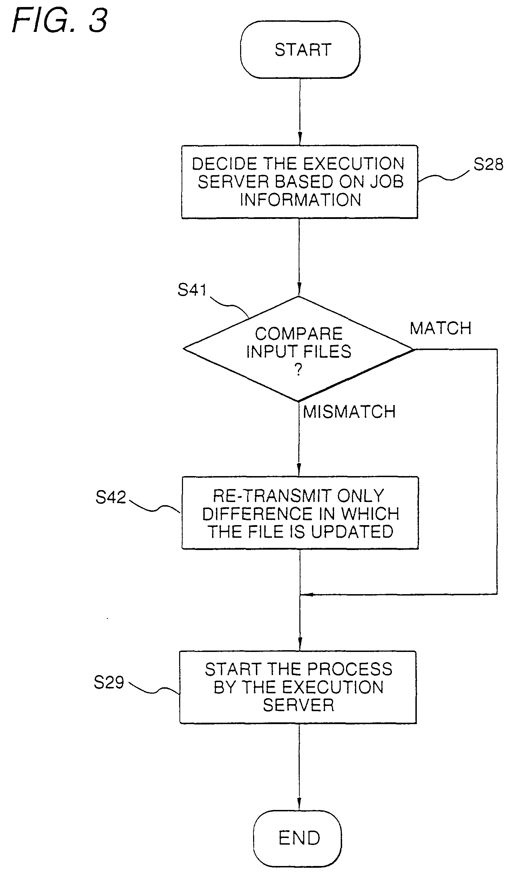

An operation thereof will be explained with reference to a flowchart in FIG.3 hereunder. Then, the execution server for executing the requested job is decided based on the information necessary for the job execution, that are transferred from the client 2 to the job queuing server 3 (step S28). The server having the higher priority in the priority list is decided as the job execution server. Then, execution of the job is started after the job execution server is brought into the condition that can execute the job (step S29).

As described above, according to the present embodiment, since a job transferring function of deciding the optimum computer to execute the job before the job is executed and then transferring the input file necessary for the job to the computer is provided, the transfer time of the input file can be suppressed to the minimum time after the job execution is started and thus the time required until the end of job can be reduced.

(Embodiment 2)

A second embodiment of the present invention will be explained with reference to the drawings hereunder. FIG.1 and FIG.3 are views showing the distributed processing job executing method according to the second embodiment of the present invention. The content is started from step S41 in FIG.3. The contents in operation will be explained hereunder. First, the input file that is transferred to the storage system of the job execution server is compared with the input file on the file server 41 (step S41). If the input file has been updated after the comparison, an updated area is transferred to the storage system of the job execution server in byte unit by using the function of holding the latest data on the storage system provided to the file server 41 (step S42).

As described above, according to the present embodiment, if the input file on the second computer (file server) is changed, the input file on the second computer (file server) is compared with the input file transferred to the third computer (server) in byte unit, and then only the changed area is transferred from the second computer (file server) to the third computer (server). Therefore, the wasteful file transfer can be prevented and thus the time required until the end of job can be reduced.

(Embodiment 3)

A third embodiment of the present invention will be explained with reference to the drawings hereunder. FIG. 1 is a view showing a network system according to the third embodiments of the present invention. The third embodiment is a network that distributed-processes the job thrown from the client by the server, according to the system in which resources used in the jobs are arranged to be distributed to a plurality computers onto the local network, in which a plurality of local networks (LANs) are connected mutually via the wide area network (WAN) , and especially the method of transferring the input files used by the job to the server previously.

Upon executing the job, the optimum computer is selected from the computers on a plurality of local networks 10, 12 being connected mutually via the wide area network 11 (WAN) to execute the job. However, if the computer selected as the optimum one to execute the job is connected to the local network 12 connected to the wide area network 11, the input file of the job must be transferred via the wide area network 11. Normally, the network line speed of the wide area network 11 is lowered to about 1/100 to 1/1000 rather than the local network. Especially, if the input file of the job is large, the transfer time required to transfer the file from the computer on the local network 10 to the computer on the local network 12 is increased 100 time to 1000 times. Therefore, after the execution of the job is started by the computer on the local network 12, the job executes the process for loading the input file and then the transfer of the input file is started. In this case, a plenty of times are consumed to transfer the input file. As a result, operation processes of the jobs to be started after the loading of the input file are kept waiting.

As described above, according to the present embodiment, since the job transferring function of deciding the optimum computer to execute the job by using the distributed processing job executing method of the first embodiment and the second embodiment before the job is executed and then transferring the input file necessary for the job to the computer is provided, the transfer time of the input file can be suppressed to the minimum time after the job execution is started and thus the time required until the end of job can be reduced.

According to the above configuration, if the server for executing the job is connected to the computer via the wide area network (WAN), the transfer of the input file is started before the execution of the job is started. Hence, even if the wide area network (WAN) is the bottleneck in the system, the job processing time can be reduced because the starting time of the transfer of the input file is early.

Also, if the input file on the second computer (file server) is changed, the input file on the second computer (file server) is compared with the input file transferred to the third computer (server) byte by byte, and then only the changed area is transferred from the second computer (file server) to the third computer (server). Therefore, the wasteful file transfer can be prevented and thus the job processing time can be reduced.

**Claims**

1.  A distributed processing job executing method applied to a network system in which resources used by a job are distributed and arranged to a plurality computers on respective local networks, in which a plurality of local networks are connected mutually via a wide area network, and a job queuing server for distributed- processing the job according to loading condition of the computers is provided, said method comprising steps of:

    preparing a priority list of job execution based on a number of job executable severs, load of servers, information of network location by a first computer, as an information group obtained from the job queuing server;
    transferring input files on a second computer to a third computer having a higher priority in the priority list; and
    transferring information of the job and the priority list to the job queuing server to start execution of the job.

2.  A distributed processing job executing method according to claim 1, wherein the input file on the second computer is compared with the input file transferred to the third computer, and then only an area updated on the second computer is transferred to the third computer if the file on the second computer is updated.

3.  A network system in which resources used by a job are distributed and arranged to a plurality computers on respective local networks, in which a plurality of local networks are connected mutually via a wide area network, and a job queuing server for distributed- processing the job according to loading condition of the computers is provided, said network system which distributed-processes jobs executed by the first computer, based on the distributed processing job executing method comprising steps of: preparing a priority list of job execution based on a number of job executable severs, load of servers, information of network location by a first computer, as an information group obtained from the job queuing server; transferring input files on a second computer to a third computer having a higher priority in the priority list; and transferring information of the job and the priority list to the job queuing server to start execution of the job.

# FIG. 1

**CLIENT** (2)

**JOB QUEUING SERVER** (3)

**FILE SERVER** (42)

**APPLICATION PROGRAM**

**LOCAL NETWORK (LAN)** (10)

**WIDE AREA NETWORK (WAN)** (11)

**LOCAL NETWORK (LAN)** (12)

**FILE SERVER** (41)

**SERVER** (51)

**SERVER** (52)

**INPUT FILE**

**STORAGE SYSTEM**

**STORAGE SYSTEM**

EP 1 187 016 A1

# FIG. 2

```
                    ┌──────────┐
                    │  START   │
                    └────┬─────┘
                         │
                         ▼
              ┌────────────────────┐
              │  TRANSMIT JOB NAME, │    S21
              │   ETC. FOR JOB      │
              │    EXECUTION        │
              └─────────┬──────────┘
                        │
                        ▼
              ┌────────────────────┐
              │ GET VARIOUS INFOR-  │    S22
              │   MATION FROM A     │
              │  QUEUING SERVER     │
              └─────────┬──────────┘
                        │
                        ▼
              ┌────────────────────┐
              │ INITIALIZE PRIORITIES│   S23
              │ OF ALL SERVERS BASED │
              │ ON LOAD INFORMATION  │
              │    OF SERVERS        │
              └─────────┬──────────┘
                        │
                        ▼
              ┌────────────────────┐
              │   ADD NETWORK       │    S24
              │  CONDITION TO THE   │
              │  SERVER PRIORITY    │
              └─────────┬──────────┘
                        │
                        ▼
              ┌────────────────────┐
              │  MAKING UP A LIST OF │   S25
              │   JOB EXECUTABLE    │
              │     SERVERS         │
              └─────────┬──────────┘
                        │
                        ▼
              ┌────────────────────┐
              │  TRANSFER AN INPUT  │    S26
              │   FILE ONTO A       │
              │  EXECUTION SERVER   │
              └─────────┬──────────┘
                        │
                        ▼
              ┌────────────────────┐
              │  TRANSFER THE JOB   │    S27
              │  TO THE JOB QUEUING │
              │     SERVER          │
              └─────────┬──────────┘
                        │
                        ▼
                   ┌──────────┐
                   │   END    │
                   └──────────┘
```

# FIG. 3

START

DECIDE THE EXECUTION
SERVER BASED ON JOB
INFORMATION — S28

S41 — COMPARE
INPUT FILES
?

MATCH

MISMATCH

S42 — RE-TRANSMIT ONLY
DIFFERENCE IN WHICH
THE FILE IS UPDATED

S29 — START THE PROCESS
BY THE EXECUTION
SERVER

END

# FIG. 4

> (JOB NAME)
>
> (INPUT FILE NAME)
>
> (USER NAME), ETC.

# FIG. 5

> (JOB NAME)
>
> (INPUT FILE NAME)
>
> (USER NAME), ETC.
>
> ---
>
> (NUMBER OF EXECUTABLE SERVER)
>
> ---
>
> (NUMBER OF EXECUTION QUEUING JOB)
>
> ---
>
> (INFORMATION OF SERVER)
>
> NAME OF SERVER 51, LOAD,
>
> NETWORK LOCATION, NETWORK LINE SPEED.
>
>
> NAME OF SERVER 52, LOAD,
>
> NETWORK LOCATION, NETWORK LINE SPEED.

**European Patent Office**

**EUROPEAN SEARCH REPORT**

Application Number

EP 00 11 9569

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | WO 99 40514 A (BALTER JAMES A ;FARBER DAVID A (US); GREER RICHARD E (US); SWART A) 12 August 1999 (1999-08-12) * abstract; claim 1; figure 1 * * page 19, line 18 - page 22, line 7 * | 1,3 | G06F9/46 |
| A | EP 0 836 145 A (AT & T CORP) 15 April 1998 (1998-04-15) * the whole document * | 2 | |
| A | US 5 881 238 A (EMMES DAVID BRUCE ET AL) 9 March 1999 (1999-03-09) * the whole document * | 1,3 | |

TECHNICAL FIELDS SEARCHED (Int.Cl.7)

G06F
H04L

The present search report has been drawn up for all claims

| Place of search | Date of completion of the search | Examiner |
|---|---|---|
| THE HAGUE | 19 March 2001 | Michel, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 00 11 9569

This annex lists the patent family members relating to the patent documents cited in the above-mentioned European search report.
The members are as contained in the European Patent Office EDP file on
The European Patent Office is in no way liable for these particulars which are merely given for the purpose of information.

19-03-2001

| Patent document cited in search report | | Publication date | Patent family member(s) | | Publication date |
|---|---|---|---|---|---|
| WO 9940514 | A | 12-08-1999 | AU | 2652999 A | 23-08-1999 |
| | | | EP | 1053524 A | 22-11-2000 |
| | | | NO | 20004010 A | 10-10-2000 |
| EP 0836145 | A | 15-04-1998 | US | 5931904 A | 03-08-1999 |
| | | | CA | 2217370 A | 11-04-1998 |
| | | | JP | 10214239 A | 11-08-1998 |
| US 5881238 | A | 09-03-1999 | US | 5603029 A | 11-02-1997 |